# EUROPEAN PATENT APPLICATION

(11) **EP 1 411 573 A2**
(43) Date of publication of application: **21.04.2004**
(21) Application number: 03022920.7
(22) Date of filing: 09.10.2003
(51) Int. Cl.: H01M 8/06, C01B 3/32, F23D 14/22

(54) **Burner, hydrogen generator, and fuel cell power generation system**

(30) Priority: 16.10.2002 JP 2002301799
(71) Applicant: MATSUSHITA ELECTRIC INDUSTRIAL CO., LTD., Kadoma-shi, Osaka 571-8501 (JP)
(72) Inventor: Maenishi, Akira, Ikedashi, Osaka 563-0055 (JP); Yotsuya, Motoo, Soraku-gun, Kyoto 619-0224 (JP); Mukai, Yuji, Kadoma-shi, Osaka 571-0070 (JP); Asou, Tomonori, Kitakatsuragi-gun, Nara 635-0831 (JP)
(74) Representative: Patentanwälte Leinweber & Zimmermann

(57) **Abstract**

A burner comprises a fuel distributor having a plurality of fuel injection holes through which a fuel gas is injected into a combustion space 3, an air injector 2 placed to surround the fuel distributor and having a plurality of air injection holes through which air is injected into the combustion space 3, a temperature detector placed such that a temperature detecting portion at a tip end thereof is located within the air injection hole, a body portion thereof is contained within the air injector, and an air layer is formed between the temperature detector and an inner wall of the air injector 9, and a flame detector connected to the temperature detector, for detecting a flame condition based on temperature information within the combustion space which is obtained from the temperature detector.

## Description

### BACKGROUND OF THE INVENTION

### 1. Field of the Invention

The present invention relates to a burner. Particularly, the present invention relates to a burner configured to perform combustion using a fuel gas containing a high content of hydrogen and a low content of hydrocarbon based substance. More particularly, the present invention relates to a burner used in a hydrogen generator configured to generate hydrogen to be supplied to apparatus using hydrogen such as a fuel cell, from a fuel gas mainly containing a hydrocarbon based substance as a compound containing at least carbon and hydrogen, for example, a natural gas, LPG, gasoline, naphtha, coal oil, or methanol, or a burner configured to combust a fuel gas containing hydrogen as a major component such as an off-gas delivered from the fuel cell, to generate heat to be used for air-conditioning or supplying hot water.

### 2. Description of the Related Art

In a fuel cell power generation system, a hydrogen generator that generates hydrogen to be supplied to a fuel cell is configured such that water is added to a fuel gas mainly containing a hydrocarbon based substance, such as a natural gas, LPG, gasoline, naphtha, coal oil, or methanol, and the resulting mixture is heated at 650 to 700°C, so that the fuel gas is reformed to allow hydrogen to be taken out (reforming reaction). The reformed gas containing a high content of hydrogen obtained by the reforming reaction is supplied to the fuel cell and used for power generation. Heating in the reforming reaction is performed by using a burner. The burner is configured to combust the fuel gas and air to generate a flame, thereby generating heat. In the hydrogen generator, using the heat generated by the burner, the heating for the reforming reaction is performed. As a fuel gas of the burner, for example, an off-gas delivered from the fuel cell is used for efficient use of a feed gas. The off-gas contains a high content of hydrogen because it contains large amount of hydrogen which remains unused after the reaction in the fuel cell and hence has high reactivity. For this reason, when a mixture of the off-gas as the fuel gas and the air is supplied to a combustion space (or chamber), the problem that the flame flows back will arise. In such a situation, problems associated with safety arises. Accordingly, in the burner, the off-gas and the air are independently supplied to the combustion space.

In the burner configured as described above, in order to detect ignition mistake, vanishment of flame, abnormal combustion, or the like for the purpose of safe and efficient combustion, a flame rod extends from outside to an inside of the combustion space to detect the flame (see Japanese Laid-Open Paten Application Publication No. 2001 - 201046. An igniter installed in an upper space of the combustion space is adapted to perform ignition (see Japanese Laid-Open Patent Application Publication No. Hei. 7 - 22043).

In a flame detecting method using the flame rod, a voltage is applied between the flame rod in contact with the flame generated within the combustion space and a burner body, and a current generated by ions residing within the flame is detected, so that the flame is detected based on the current. The flame detecting method using the flame rod is advantageous when numerous ions are generated during a combustion reaction generating the flame, for example, the fuel gas containing large amount of carbon hydrogen based combustible substances. However, when the fuel gas containing a high content of hydrogen and a low content of the hydrocarbon based combustible substance is combusted as described above, no ions are generated in a combustion reaction generating the flame. For this reason, no current flows when the voltage is applied between the flame rod and the burner body, and it is therefore difficult to detect the flame.

Meanwhile, in the hydrogen generator, a hydrogen-rich gas generated during start and containing H₂ as a major component contains large amount of CO in addition to H₂. Such a hydrogen-rich gas (hereinafter referred to as a generated gas) is not supplied to the fuel cell because CO contained in the gas degrades an electrode of the fuel cell. Accordingly, the generated gas is also used as the fuel gas of the burner for efficient use as in the case of the off-gas. As described above, in the hydrogen generator, the hydrocarbon based substance (e.g., CH₄) contained in the fuel gas is converted into H₂ and CO₂ by the reforming reaction. Therefore, the hydrocarbon based combustible substance remaining unconverted, which is contained in the generated gas, is less. For this reason, in the combustion reaction using the generated gas as the fuel gas, generated ions, are less as in the case of using the off-gas. So, when the flame detecting method using the flame rod is applied, the current detected when applying the voltage between the flame rod and the burner body is small, and it is therefore difficult to detect the flame as in the case of using the off-gas.

In the burner of the hydrogen generator in the fuel cell power generation system, a current value detected by the flame rod is converted into a voltage value, and it is judged whether or not a flame has vanished based on whether or not the voltage value is smaller than a threshold voltage for judgment of vanishment of the flame. When the voltage value is lower than the threshold voltage, it is judged that the flame has vanished and an operation is stopped. It should be noted that, in the burner to which the off-gas or the generated gas is supplied as the fuel gas, the current value detected by the flame rod is small because of small amount of ions residing in the flame, and hence, the voltage value is small. For this reason, if the threshold voltage used for judgment of vanishment of the flame is set relatively higher, the voltage value obtained by detection becomes below the threshold voltage, and it is judged that the flame has vanished regardless of generation of the flame. In view of this, it is necessary to set the threshold lower. But, in such a case, there is a possibility that misjudgment is made due to variation in the value caused by noises in a component of a system. As should be appreciated from the above, when combustion is performed using the off-gas or the generated gas as the fuel gas, it is difficult to detect the flame with high accuracy in the flame detecting method using the flame rod.

In addition, in the above configuration of the burner, there exists a need for a space in the vicinity of the combustion space in which the flame rod is provided or a discharge electrode for ignition is provided. However, in the configuration provided with the above installation spaces, combustion heat from the burner is transmitted to the space which should not be heated, and is radiated therefrom. This reduce efficiency of heat transmission to the hydrogen generator to be heated. Further, the installation space increases a size of the burner, and hence reduce a space around the burner. As a result, the configuration around the burner is difficult to design flexibly

### SUMMARY OF THE INVENTION

The present invention has bee made under the circumstances, and an object of the present invention is to provide a burner capable of accurately detecting a flame in combustion of a fuel gas containing a low content of hydrocarbon based combustible substance. Another object of the present invention is to provide a burner capable of efficiently heating an object to be heated while inhibiting heat radiation to an object other than the object to be heated, and having a compact configuration with flexibility increased around the burner.

According to the present invention, there is provided a burner having a fuel distributor configured to inject a fuel supplied from a fuel supply device; and an air injector placed such that the air injector surrounds the fuel distributor so as to form a combustion space around the fuel distributor and having an air injection hole through which air supplied from an air supply device is injected, the air injected from the air injection hole and the fuel injected from the fuel distributor being combusted to allow a flame to be generated in the combustion space, the burner comprising a temperature detector for detecting a temperature of the combustion space, the temperature detector having a temperature detecting portion located within the air injection hole or in an air flow passage of the combustion space; and a flame detector for detecting a condition of the flame within the combustion space, based on the temperature detected by the temperature detector.

In accordance with such a configuration, since the flame condition is detected by detecting the temperature within the combustion space using the temperature detector, the flame can be detected accurately and correctly regardless of the type of the fuel gas in combustion using a fuel gas containing a low content of hydrocarbon based combustible substance.

The temperature detector may be placed such that the temperature detecting portion is located within the air injection hole or within the combustion space in the vicinity of the air injection hole.

In accordance with such a configuration, since the temperature detecting portion is located within the air injection hole or within the combustion space in the vicinity of the air injection hole, the temperature detecting portion is not heated up to the temperature as high as that of the combustion space. Therefore, the temperature detector can detect the temperature within a heat-resistance limit, and degradation of the temperature detector due to heat can be avoided. In addition, since the temperature detector is placed so as to protrude slightly into the combustion space, detection of the temperature within the combustion space can be carried out without disturbing the flame generated within the combustion space. These effects are remarkable in the configuration in which the temperature detector is placed such that the temperature detecting portion is located within the air injection hole.

The temperature detector may be placed so as to penetrate the air injector.

It is preferable that the temperature detecting portion of the temperature detector is thermally insulated from an inner face of the air injection hole.

In accordance with such a configuration, since the temperature detecting portion of the temperature detector is placed to be thermally insulated from the air injection hole, temperature variation within the combustion space can be detected smoothly without being affected by the air injector.

It is preferable that a gap is formed between the temperature detector and the inner face of the air injector, and a width of the gap is substantially uniform over an outer periphery of the temperature detector.

In accordance with such a configuration, the temperature detector is thermally insulated from the air injection hole by the air layer existing within the gap. In addition, since flow of air toward the combustion space is formed within the air layer, the temperature detecting portion of the temperature detector can be cooled quickly by the flow of the air when the flame has vanished. This follows that vanishment of the flame can be detected immediately. In particular, since uniform flow of air is formed in the air layer in the structure in which the width of the air layer is substantially uniform over the entire outer periphery of the temperature detector, the air can be supplied stably and combustion state can be stabilized.

It is preferable that the air injector has a plurality of air injection holes, and a cross-sectional area of the gap between the air injection hole within which the temperature detector is provided and the temperature detector is substantially equal to a cross-sectional area of the air injection hole within which the temperature detector is not provided.

In accordance with such a configuration, disorder of an injection state of the air which is caused by provision of the temperature detector within the air injection hole, can be inhibited, and the air can be injected through the air injection hole within which the temperature detector is provided, as in other air injection holes. Thereby, the flame can be generated in proper balance and stably.

The temperature detector may have the temperature detecting portion at an end portion thereof, and a body of the temperature detector is contained within the air injector.

In accordance with such a configuration, the space in which the temperature detector is installed is unnecessary. This makes it possible to avoid heat radiation to such an installation space, and hence efficiently heat an object to be heated. Further, the burner can be small-sized, and flexibility of the configuration around the burner can be improved.

An end portion of the temperature detecting portion side of the temperature detector may be substantially covered with an oxidation film.

When using the temperature detector whose end portion is not covered with the oxidization film, the oxidization film is formed by combustion, so that the temperature varies due to the oxidization film. On the other hand, by using the temperature detector whose one end portion is covered with the oxidization film, accuracy of detection can be improved because variation in the detected temperature due to formation of the oxidization film does not occur.

An end portion of the temperature detecting portion side of the temperature detector may be substantially hemispherical.

In accordance with such a configuration, the temperature detector can be cooled quickly by the smooth flow of the air along the outer periphery of the tip end when combustion by the burner stops. During combustion, the temperature detector is subjected to heat radiation, which makes it easy to detect a temperature increase. Therefore, accuracy of detection is improved.

The temperature detector may be a sheath-shaped thermo couple.

Thereby, the configuration of the present invention can be easily achieved.

A plurality of temperature detectors may be provided at different positions within the combustion space to detect temperatures of different regions within the combustion space.

In accordance with such a configuration, since a plurality of temperature detectors can detect temperatures in different regions of the combustion space, detection of the flame can be carried out more correctly and accurately. In particular, by comparing the flame conditions in the regions of the combustion space to each other, detection of the abnormal combustion can be carried out accurately and smoothly. Therefore, combustion is stopped immediately under the abnormal combustion condition, and as a result, discharge of CO and abnormally-high temperature condition can be avoided.

The combustion space may have a cross-sectional area that increases toward a flame radiation direction.

In accordance with such a configuration, combustion is stably performed in each region of the combustion space according to a combustion amount in a wide range.

The burner may further comprise an electrode contained within the fuel distributor and having an end portion that protrudes into the combustion space; and an ignition circuit electrically connected to the electrode, for applying a voltage to the electrode to allow electric discharge from the electrode to occur within the combustion space.

In accordance with such a configuration, by applying a voltage to the electrode to allow electric discharge to occur between the fuel distributor or the air injector and the electrode, ignition can take place. Since the electrode is contained within the fuel distributor, a space for installing the ignition means becomes unnecessary. Because of the absence of such an installation space, heat radiation to the space can be avoided, and the object to be heated can be heated efficiently. In addition, the burner can be small-sized and flexibility of the configuration around the burner can be improved.

The burner may further comprise a switch configured to perform switching so that the electrode is connected to the ignition circuit during ignition, and the electrode is connected to the flame detector when the flame detector judges that ignition has occurred based on temperature information of the combustion space from the temperature detector, wherein the flame detector detects the flame based on the temperature information from the temperature detector and detects the flame based on an output current from the electrode.

In accordance with such a configuration, concurrently with the flame detection using the temperature detector, the conventional flame detection using the electrode can be carried out. Therefore, the flame can be detected more accurately and correctly. Such a configuration is easily achieved without significant change, because the electrode as the ignition means can be used to detect the flame,

The end portion of the electrode that protrudes into the combustion space may be placed in a region different from a region of the combustion space in which the temperature detector is placed, to detect the flame in the region different from the region where the flame is detected by the temperature detector.

In accordance with such a configuration, the temperatures of different regions in the combustion space can be detected more correctly and accurately by using the temperature detector and the electrode. In particular, by comparing the flame conditions in the regions of the combustion space to each other, detection of the abnormal combustion can be carried out easily, accurately and smoothly. Therefore, combustion is stopped under abnormal combustion condition, and as a result, discharge of CO and abnormally-high temperature condition can be avoided.

The temperature detector may detect the flame in an upper region of the combustion space in the flame radiation direction, and the electrode may detect the flame in a lower region of the combustion space in the flame radiation direction.

In accordance with such a configuration, the flame can be detected in both of the upper and lower regions of the combustion space, a state in which ignition is detected in the upper region but ignition is not detected in the lower region, and ignition is not detected in the upper region but ignition is detected in the lower region, can be detected as the abnormal combustion condition.

According to the present invention, there is provided a hydrogen generator comprising a burner having the above configuration, and a reformer for generating a reformed gas containing hydrogen by a reforming reaction of a hydrocarbon based material, wherein the burner is configured to heat the reformer.

In accordance with such a configuration, since the burner having the configuration is used, the flame can be detected accurately and correctly even when the gas containing a low content of hydrocarbon based combustible substance is used as the fuel gas for the burner. The hydrogen generator having such a configuration can generate the flame stably regardless of the type of the fuel gas while detecting the flame.

According to the present invention, there is provided a fuel cell power generation system comprising the hydrogen generator having the above configuration, and a fuel cell configured to generate a power, using a gas containing hydrogen as a major component which is supplied from the hydrogen generator to a fuel electrode and an oxidizing gas supplied to an oxidizing electrode.

In accordance with the above configuration, since the above-described effects are obtained in the hydrogen generator, the off-gas or the generated gas containing hydrogen as a major component, is combusted as the fuel gas by the burner to generate heat for the reforming reaction. Consequently, it is possible to achieve a system in which power generation efficiency is high and burden on environment is less.

The above and further objects and features of the invention will more fully be apparent from the following detailed description with accompanying drawings.

### BRIEF DESCRIPTION OF THE DRAWINGS

Fig. 1 is a cross-sectional view schematically showing a configuration of a burner according to a first embodiment of the present invention;
Fig. 2 is a partially enlarged cross-sectional view schematically showing placement of a temperature detector in Fig. 1.
Fig. 3 is a partially enlarged plan view schematically showing placement of the temperature detector in Fig. 2;
Fig. 4 is a cross-sectional view schematically showing a configuration of a burner according to an alternative example of the first embodiment;
Fig. 5 is a cross-sectional view schematically showing a configuration of a burner according to a second embodiment of the present invention;
Fig. 6 is a cross-sectional view schematically showing a configuration of a burner according to a third embodiment of the present invention;
Fig. 7 is a cross-sectional view schematically showing a configuration of a burner according to a fourth embodiment of the present invention;
Fig. 8 is a view schematically showing a configuration of a fuel cell power generation system according to a fifth embodiment of the present invention; and
Fig. 9 is a view showing operation data of a hydrogen generator in the fuel cell power generation system according to the fifth embodiment.

### DETAILED DESCRIPTION OF THE PREFERRED EMBODIMENTS

Hereinafter, preferred embodiments of the present invention will be described with reference to the accompanying drawings.

### (Embodiment 1)

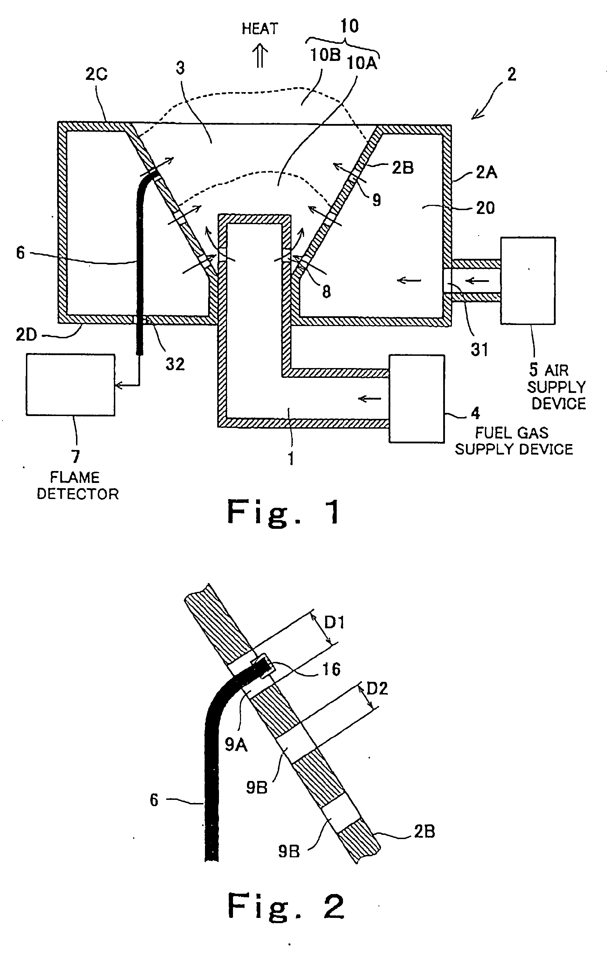

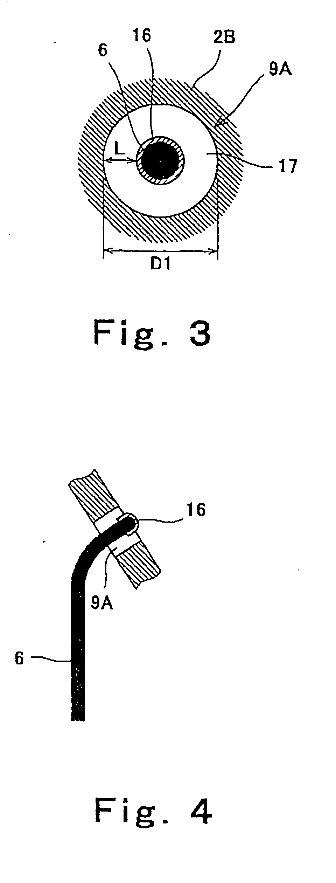

Fig. 1 is a cross-sectional view schematically showing a configuration of a burner according to a first embodiment of the present invention. Fig. 2 is a partially enlarged cross-sectional view schematically showing placement of a temperature detector in Fig. 1, and Fig. 3 is a partially enlarged plan view schematically showing placement of the temperature detector in Fig. 2.

As shown in Fig. 1, the burner comprises a fuel distributor 1 provided with a plurality of fuel injection holes 8, an air injector 2 provided with a plurality of air injection holes 9, and a temperature detector 6 contained and placed within the air injector 2. A space surrounded by an inner peripheral wall 2B of the air injector 2 is a combustion space (or combustion chamber) 3. The temperature detector 6 detects temperature of the combustion space 3.

The air injector 2 is cylindrical and are configured to open at both ends. The air injector 2 is hollow and its internal shape is such that the inner peripheral wall 2B is inclined, thereby forming an inverted-frustum-cone shaped space in which a cross-sectional area of an inner hole of a cylinder increases toward an opening at the upper end (exit from which the flame radiates). In other words, the inner peripheral wall 2B forms a cup shape. The cup-shaped space corresponding to the inner hole of the air injector 2 forms the combustion space 3 in which the flame is generated and combustion is performed. The air injector 2 has a hollow cylindrical peripheral wall portion. The peripheral wall portion is configured such that an inner space 20 is formed by an outer peripheral wall 2A, the inner peripheral wall 2B, an upper end wall 2C, and a lower end wall 2D, and surrounds the combustion space 3 in the circumferential direction. The inner space 20 of the air injector 2 communicates with the combustion space 3 through the plurality of air injection holes 9 arranged both in the circumferential direction and in a vertical direction of the air injector 2. The inner space 20 has an air supply port 31 provided in the outer peripheral wall 2A, and an air supply device 5 provided outside is connected to the air supply port 31. The air supply device 5 has an air blower (not shown) such as a pump or a fan, and is configured to supply air for combustion to the air injector 2 while adjusting its flow rate. The flow rate of air supply is adjusted by controlling an operation of the air blower, or by controlling a flow rate adjuster provided downstream of the air blower such as a valve in a supply system.

The air injector 2 is, for example, made of metal. The air injector 2 has a heat capacity larger than that of a temperature detector 6 mentioned later, because of its large volume. As shown in Fig. 2, the air injection holes 9 (9A and 9B) that are circular and have predetermined diameters are formed in the inner peripheral wall 2B forming the combustion space 3 at predetermined intervals. Here, the air injection holes 9 are comprised of one air injection hole 9A having a diameter D1 of 2.0mm and a number of air injection holes 9B having a diameter D2 of 1.2mm. And, the temperature detector 6 is provided within the air injection hole 9A. The temperature detector 6 is configured such that a temperature detecting portion (not shown) provided at a tip end thereof slightly protrudes into the combustion space 3 to face the combustion space 3 and to be located in flow of the air. And, a body of the temperature detector 6 extends through the inner space 20 of the air injector 2 and through a penetrating hole 32 formed in a lower end wall 2D and its base end protrudes outside. The temperature detector 6 is supported by a support member (not shown), and sealing is created by a seal member (not shown) between the penetrating hole 32 of the air injector 2 and the temperature detector 6 in order to inhibit leakage of air. Here, as the temperature detector 6, a sheath-shaped thermocouple having a diameter of 1.6mm is used. The tip end portion including the temperature detecting portion (not shown) is covered with an oxidization film 16. By covering the tip end portion with the oxidization film 16, the temperature within the combustion space 3 can be detected accurately as described later. The temperature detector 6 is placed so as not to be in contact with an inner face of the air injection hole 9A, and hence, there is a gap between the temperature detector 6 and the inner face of the air injection hole 9A. As shown in Fig. 3, the temperature detector 6 is placed concentrically within the circular air injection hole 9A. Thereby, a width L of the annular air layer 17 formed on an outer periphery of the temperature detector 6 (i.e., distance between the inner peripheral face of the air injection hole 9A and an outer peripheral face of the temperature detector 6) is substantially uniform over the entire outer periphery of the temperature detector 6. In the structure of the air injection hole 9A within which the temperature detector 6 is placed, a cross-sectional area of a portion as an air flow passage (i.e., air layer 17) is substantially equal to that of the air injection hole 9B, and the air flow passage having the uniform width L is formed on the outer periphery of the temperature detector 6. Instead of the thermo couple, for example, a thermistor or the like may be used as the temperature detector 6. The temperature detector 6 is connected to a flame detector 7 provided outside of the burner.

The combustion space 3 has a cross-sectional area that decreases from the upper portion (an exit from which the flame is radiated) toward a lower portion thereof. A fuel distributor 1 is fitted to the lower portion of the combustion space 3. The fuel distributor 1 is pipe-shaped and its upper end is closed. The fuel distributor 1 is placed such that an upper end portion provided with a plurality of fuel injection holes 8 arranged in the circumferential direction protrudes into a center portion of the combustion space 3 having a circular cross-section and a lower end thereof is connected to the fuel gas supply device 4 provided outside. The fuel gas supply device 4 is configured to supply the fuel gas containing a combustible gas to the fuel distributor 1 while adjusting the flow rate of the fuel gas, and has the blower (not shown) such as the pump or the fan. The flow rate of the fuel gas is adjusted by controlling an operation of the air blower, or by controlling a flow rate adjustor provided downstream of the air blower such as the valve in the supply system.

Subsequently, an operation of the burner during combustion will be described.

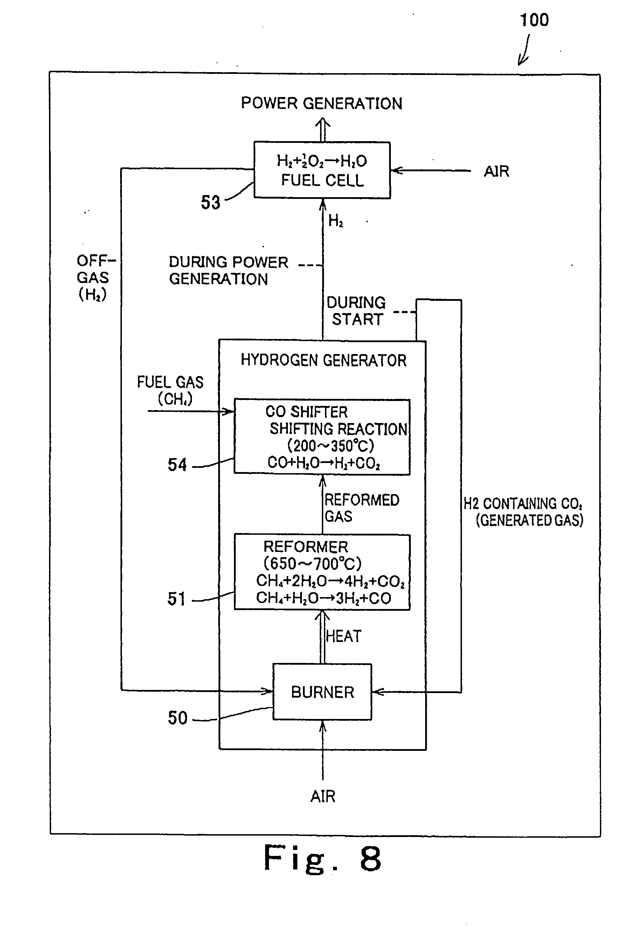

As indicated by an arrow in Fig. 1, the fuel gas is supplied from the fuel gas supply device 4 to the fuel distributor 1. Further, the fuel gas is injected from the fuel distributor 1 into the combustion space 3 through the fuel injection hole 8. As defined herein, the fuel gas supplied from the fuel gas supply device 4 refers to a combustible gas containing hydrogen as a major component. As described later in an fifth embodiment (Fig. 8), as the fuel gas, a generated gas which is generated during start of the hydrogen generator in the fuel cell power generation system, or the off-gas of the fuel cell, may be used.

Meanwhile, air is supplied from the air supply device 5 to the air injector 2. As indicated by arrows in Fig.1, the air is introduced into the inner space 20 of the air injector 2, and is injected into the combustion space 3 through the air injection holes 9. At this time, the flow rates of the air being injected from both of the holes 9A and 9B are substantially equal, because the cross-sectional areas of the air flow passages of the air injection holes 9A and 9B are substantially equal. Therefore, disorder of an air injection state of the air due to placement of the temperature detector 6 within the air injection hole 9A is minimized, and disorder of a combustion state is inhibited. In addition, since the air flow passage having the uniform width L is formed on the outer periphery of the temperature detector 6 as described above, the air is injected substantially uniformly from the air injection hole 9A in the outer peripheral region of the temperature detector 6. Therefore, disorder of the injection state of the air is further inhibited, and the disorder of the combustion state is further inhibited.

The fuel gas and the air which are thus supplied to the combustion space 3 are mixed therein. And, ignition is performed using an ignition device (not shown) such as gathering coal or a heater. The fuel gas and the air are reacted to be combusted in the combustion space 3, thereby generating a flame 10. As described above, since the air is supplied from the air injection holes 9A and 9B at substantially equal flow rate, the flame 10 can be generated stably and in proper balance. And, as indicated by an arrow, heat emitted from the generated flame is transmitted to an object to be heated. Thus, by supplying the fuel gas and the air independently to be combusted within the combustion space 3, combustion is carried out stably without back flow of the flame in the supply system, which occurs in the conventional configuration in which the mixture of the combustible fuel gas and the air is supplied to and combusted in the combustion space 3.

During the combustion, the condition of the flame is detected using the temperature detector 6 to know whether or not ignition, flame vanishment, or abnormal combustion has occurred. Hereinbelow, how the flame is detected will be described.

Upon the flame 10 being generated within the combustion space 3, the temperature within the combustion space 3 which had normal temperature, increases, and hence, the temperature detector 6 detects the increased temperature. At this time, the temperature detector 6 is not directly exposed to the flame of the combustion space 3, because the temperature detecting portion (not shown) at the tip end thereof is located within the air injection hole 9A of the air injector 2, and the body thereof is contained within the inner space 20 of the air injector 2. For this treason, during combustion, the temperature of the temperature detector 6 does not increase to a high temperature (about 1000°C) up to which the temperature of the combustion space 3 increases. Under this condition, the temperature detector 6 is placed under the temperature within a heat-resistant limit, and degradation thereof is avoided. In addition, since the temperature detector 6 protrudes only slightly into the combustion space 3, the temperature within the combustion space 3 can be detected without disturbing the flame generated within the combustion space 3.

In addition, since the temperature detecting portion (not shown) at the tip end of the temperature detector 6 faces the combustion space 3, the temperature within the combustion space 3 can be detected accurately and smoothly. It should be noted that the tip end at which the temperature detecting portion is provided is not directly in contact with the inner face of the air injection hole 9A, and is thereby thermally insulated from the air injector 2 because of the presence of the air layer 17 formed around the temperature detector 6. Accordingly, the temperature detector 6 can detect variation in the temperature within the combustion space 3 without being affected by the variation in the temperature of the inner peripheral wall 2B of the air injector 2. In other words, since the temperature of the temperature detecting portion of the temperature detector 6 increases more quickly than the temperature of the inner peripheral wall 2B of the air injector 2 having a large heat capacity increases, the ignition can be detected smoothly, accurately, and correctly.

Temperature information of the combustion space 3 detected by the temperature detector 6 is transmitted to the flame detector 7 in the form of an electric signal. Upon reception of the electric signal, the flame detector 7 judges whether or not the flame 10 has been generated within the combustion space 3 (i.e., ignition has occurred) based on the temperature variation in the combustion space 3. To judge whether or not the ignition has occurred, it may be judged whether or not the detected temperature of the combustion space 3 is higher than a predetermined temperature, or otherwise, it may be judged whether or not temperature increasing rate per unit time is higher than a predetermined temperature increasing rate.

If the flame has vanished for some reasons, then the temperature of the combustion space 3 which was kept high is rapidly reduced. Correspondingly, the temperature detected by the temperature detector 6 is reduced. The reduced temperature information of the combustion space 3 is transmitted to the flame detector 7 in the same manner as described above. Upon reception of the electric signal, the flame detector 7 judges whether or not the flame 10 has vanished within the combustion space 3 based on the temperature variation. To judge whether or not the flame 10 has vanished, it may be judged whether or not the detected temperature of the combustion space 3 is lower than a predetermined temperature, or otherwise, it may be judged whether or not temperature reducing rate per unit time is higher than a predetermined temperature reducing rate. As described above, since the air layer 17 is formed in the gap between the temperature detecting portion of the temperature detector 6 and the inner face of the air injection hole 9A, the temperature of the temperature detector 6 is reduced quickly soon after the flame 10 has vanished without being affected by the air injector 2. Especially, in the air layer 17 formed between the temperature detector 6 and the inner face of the air injection hole 9A, the air flows toward the combustion space 3 by supply of the air, and the temperature detector 6 is located in the flow of air. By the flow of the air, the temperature detector 6 is cooled quickly, and the temperature of the temperature detecting portion of the temperature detector 6 is reduced rapidly when heating stops after the flame 10 has vanished. Therefore, it is possible to detect vanishment of the flame 10 in a short time after the flame 10 has vanished.

In accordance with the flame detecting method described above, since the flame 10 can be detected based on the temperature variation within the combustion space 3 regardless of a current value during combustion unlike in the conventional method. As a result, even in the combustion using the fuel gas that is difficult to detect by the conventional detecting method using the flame rod, or the like, i.e., the fuel gas containing a low content of hydrocarbon based combustible substance, the flame condition can be detected accurately and correctly.

As described above, since the tip end on the temperature detecting portion (not shown) side of the temperature detector 6 is covered with the oxidation film 16, the temperature within the combustion space 3 can be detected more accurately as compared to the detecting method using the temperature detector without the oxidation film. The reason for this will be described below. In the case where the temperature detector which is not covered with the oxidation film is used, the tip end of the temperature detector is oxidized by the combustion within the combustion space 3, and in time, the oxidation film is formed. In this case, the temperature detected by the temperature detector 6 varies due to formation of the oxidization film. On the other hand, in the case where the oxidation film 16 is formed on the tip end of the temperature detector 6 as described above, the variation in the detected temperature can be avoided. Therefore, the flame can be detected more accurately.

Furthermore, in the above configuration, since the combustion space 3 is cup-shaped, i.e., inverted-frustum-cone shaped to have the cross-section that increases toward the upper portion (flame radiation exit), the flame 10 can be generated stably and in proper balance according to a combustion amount in a wide range. Specifically, in the case where the flow rate of a mixture gas of the fuel gas and the air as a combustion source is small and hence the amount of combustion is correspondingly small, the flow rate and combustion speed of the mixture gas are balanced in a region of the combustion space 3 having a small-cross-sectional area. The size of the flame is determined by the balance between the flow rate and combustion speed (reaction rate of the combustion reaction) of the mixture gas as the combustion source. When the amount of combustion is thus small under the condition in which the combustion speed is constant, a flame 10A is generated in substantially the lower region of the combustion space 3. On the other hand, when the flow rate of the mixture gas is high and hence the amount of combustion is correspondingly large, the mixture gas flow rate and the combustion speed are balanced in a region of the combustion space 3 that has a large cross-sectional area. Therefore, in this case, a flame 10B is generated in substantially the upper region of the combustion space 3. Thus, the cup-shaped combustion space 3 enables stable combustion in a wide range of combustion amount. The air injector 2 having the cup-shaped combustion space 3 is easily constituted by one component by press forming or drawing. Here, the flame is defined as a highest-temperature portion at a boundary between the region where combustion is being performed and the region where combustion is not performed. In other words, the flame is an outermost portion of the generated flame.

Further, since the temperature detector 6 is placed to be contained within the air injector 2, a space for installing the temperature detector becomes unnecessary unlike the conventional method using the flame rod as the temperature detector. That is, an installation space need not be provided around the burner. Since heat radiation from the installation space is avoided, the object to be heated can be heated efficiently. The size of the burner can be reduced because of the absence of such an installation space. As a result, the flexibility of the configuration around the burner can be greatly improved.

The hole diameter of the air injection holes 9A and 9B, the diameter of the temperature detector 6, and the shapes of these are only illustrative and are not intended to be limited to those described above. In addition, the cross-sectional areas of the air injection holes 9A and 9B are not necessarily equal, but may be different from each other so long as the air layer 17 is formed around the temperature detector 6. Furthermore, the width L of the air layer 17 may be non-uniform. As an alternative example of this embodiment, the combustion space 3 surrounded by the air injector 2 may be cylindrical to have a uniform cross-sectional area, instead of the cup-shape shown in Fig. 1.

Fig. 4 is a partially enlarged cross-sectional view schematically showing a configuration of the burner according to the alternative example of the first embodiment. As shown in Fig. 4, the burner of this alternative example is substantially identical in configuration to the burner in Fig. 1 except the following respects.

In the burner of this alternative example, the tip end of the temperature detecting portion (not shown) side of the temperature detector 6 placed within the air injection hole 9A is hemispherical. The tip end of such a shape is subjected to heat radiation more than the tip end having a comer portion, and therefore, allows the temperature increase caused by combustion to be detected accurately by the temperature detector 6. The tip end of such a shape is easily cooled by smooth air flow formed along a smooth surface of the hemispherical shape, and upon vanishment of the flame, the temperature of the tip end is rapidly reduced. So, the vanishment of the flame can be detected accurately. As should be appreciated from the foregoing, in accordance with the configuration of this alternative example, the above effects can be produced more efficiently.

### (Embodiment 2)

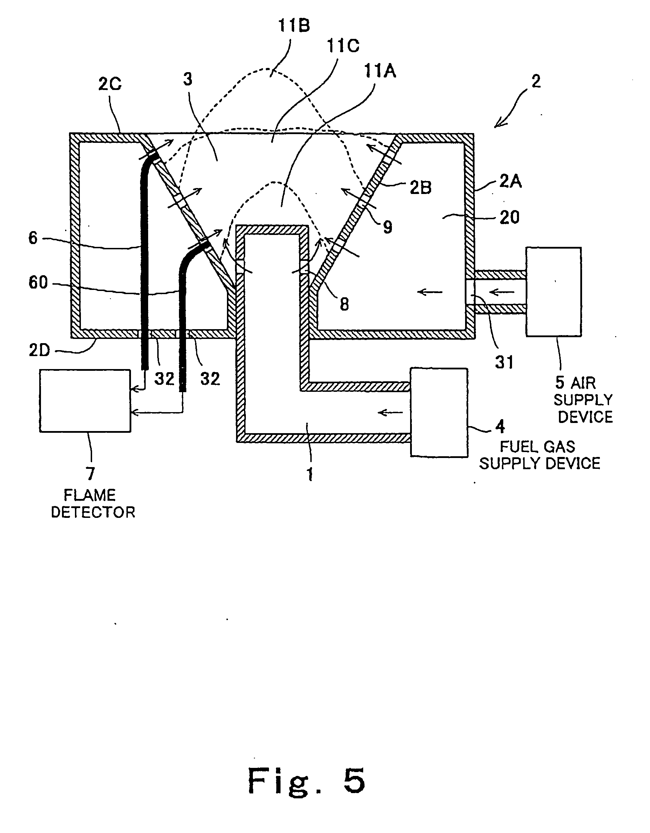

Fig. 5 is a cross-sectional view schematically showing a configuration of the burner according to a second embodiment of the present invention. The burner of this embodiment is substantially identical in configuration to the burner of the first embodiment except that a plurality of temperature detectors are placed at different positions in the combustion space.

In addition to the temperature detector 6 provided as described in the first embodiment, in the second embodiment, a temperature detector 60 is provided so as to be located lower than the temperature detector 6. The temperature detector 60 is connected to the flame detector 7 to allow temperature information relating to a lower region of the combustion space 3 detected by the temperature detector 60 to be transmitted to the flame detector 7 in the form of an electric signal. As in the temperature detector 6, the temperature detector 60 is configured such that a tip end of the temperature detecting portion (not shown) side is covered with the oxidation film 16. Also, as in the temperature detector 6, the temperature detecting portion (not shown) is located within the air injection hole 9 to be in the air flow, and an air layer having a uniform width is formed on an outer periphery of the temperature detector 60. Therefore, in accordance with the temperature detector 60, the temperature of the lower region of the combustion space 3 can be detected accurately and correctly as in the temperature detector 6. In addition, as in the first embodiment, the temperature of the upper region of the combustion space 3 can be detected accurately and correctly by the temperature detector 6. Thus, temperatures of different regions of the combustion space 3, i.e., the upper region and the lower region are respectively detected, and ignition states of these regions are compared to another. Thereby, in particular, abnormal combustion can be detected easily and correctly. When it is judged that the abnormal combustion has occurred, for example, supply of the fuel gas from the fuel gas supply device 4 is stopped to cause combustion to stop. Thus, discharge of CO due to abnormal combustion or degradation of devices including the burner due to elevated temperature, can be avoided. Hereinbelow, how the abnormal combustion is detected will be described in detail.

First, in the case where combustion is performed normally, and a flame 11C is thereby generated, the temperature of the combustion space 3 becomes substantially uniform. So, the temperature detected by the temperature detector 6 provided in the upper region of the combustion space 3 (in the vicinity of the exit of the combustion space 3) becomes substantially equal to the temperature detected by the temperature detector 60 provided in the lower region of the combustion space (in the vicinity of the fuel distributor 1), and the flame detector 7 judges that ignition has occurred in both of the upper and lower regions of the combustion space 3. So, in this case, it is confirmed that combustion is being performed normally within the combustion space 3.

However, for example, if the combustion amount becomes too large, or the amount of air supply is small for some reasons, thereby causing the flame to be lifted to some degrees, abnormal combustion takes place, and a flame 11B is generated in substantially the upper region of the combustion space 3. The flame 11B causes the upper region of the combustion space 3 to be heated greatly, thereby resulting in a temperature of this upper region higher than normal. So, the temperature detected by the temperature detector 6 provided in the upper region of the combustion space 3 becomes high. Conversely, the temperature detected by the temperature detector 60 provided in the lower region of the combustion space 3 becomes low because of absence of the flame. Temperature information of the upper region of the combustion space 3 which has been detected by the temperature detector 6 and temperature information of the lower region of the combustion space 3 which has been detected by the temperature detector 60 are respectively transmitted to the flame detector 7, which judges flame conditions based on these information. In this case, since it is detected that the temperature of the upper region of the combustion space 3 is higher than a predetermined value, based on the temperature information from the temperature detector 6, the flame detector 7 judges that that ignition has occurred in the upper region of the combustion space 3. On the other hand, since it is detected that the temperature of the lower region of the combustion space 3 is lower than the predetermined value, based on the information from the temperature detector 60, the flame detector 7 judges that the flame has vanished in the lower region of the combustion space 3. As a result, it is confirmed that the flame 11B is abnormal.

If the combustion amount becomes too small, or the amount of air supply becomes large for some reasons, abnormal combustion takes place, and a small flame 11A is generated in the lower region of the combustion space 3. The flame 11A causes the lower region of the combustion space 3 to be heated greatly, thereby resulting in a temperature of this lower region higher than normal. So, the temperature detected by the temperature detector 60 provided in the lower region of the combustion space 3 becomes high. Conversely, the temperature detected by the temperature detector 6 provided in the upper region of the combustion space 3 becomes low because of absence of the flame. Thus, based on the temperature information of the upper region of the combustion space 3 which has been detected by the temperature detector 6 and the temperature information of the lower region of the combustion space 3 which has been detected by the temperature detector 60, the flame detector 7 judges the condition of the flame 11A within the combustion space 3. In this case, since it is detected that the detected temperature of the upper region of the combustion space 3 is lower than a predetermined value, based on the temperature information from the temperature detector 6, the flame detector 7 judges that the flame has vanished in the upper region of the combustion space 3. On the other hand, since it is detected that the detected temperature of the lower region of the combustion space 3 is higher than the predetermined value, based on the temperature information from the temperature detector 60, the flame detector 7 judges that ignition has occurred in the lower region of the combustion space 3. As a result, it is judged that the flame 11A is abnormal.

It should be noted that, the number of the temperature detectors or placement of the same within the combustion space are not intended to the above.

### (Embodiment 3)

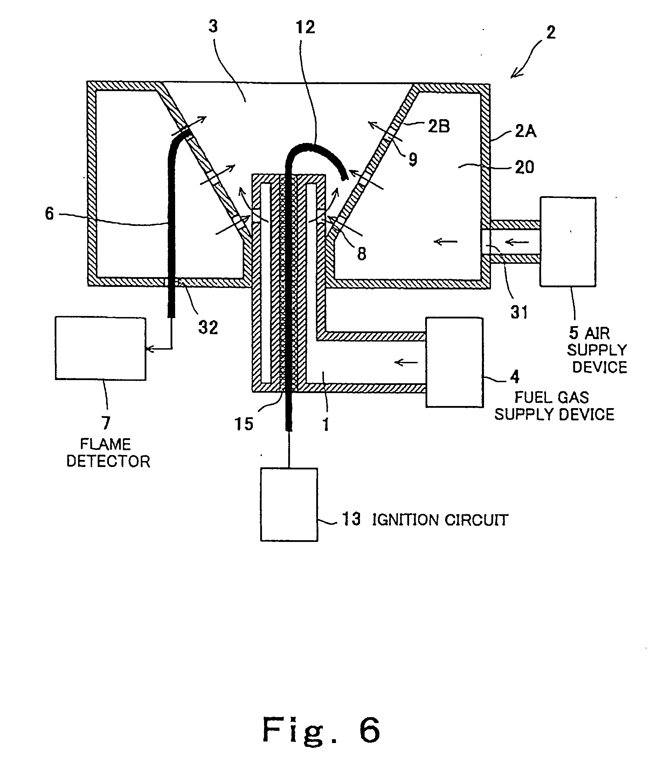

Fig. 6 is a cross-sectional view schematically showing a configuration of a burner according to a third embodiment of the present invention. The burner of this embodiment is substantially identical in configuration to the burner of the first embodiment except that an electrode 12 as an ignition means is provided within the distributor 1.

More specifically, in this embodiment, the electrode 12 is provided at the center of an inner hole of the fuel distributor 1 that is pipe-shaped and has a double-walled structure. The electrode 12 is supported by a support member 15 fitted to the inner hole of the fuel distributor 1, and a tip end of the electrode 12 protrudes into the combustion space 3. The support member 15 is made of ceramic or the like that is heat-resistant and insulative. The protruding tip end portion of the electrode 12 is bent in an arc shape toward the inner peripheral wall 2B of the air injector 2. And, a base end of the electrode 12 penetrates through a bottom wall of the fuel distributor 1 and protrudes to outside to be electrically connected to an ignition circuit 13 provided outside. A seal member (not shown) is filled in a gap between the electrode 12 and the support member 15 and in a gap between the inner peripheral wall of the fuel distributor 1 and the support member 15.

In the above configuration, during ignition, the air is injected from the air injection holes 9 of the air injector 2 into the combustion space 3, and the fuel gas is injected from the fuel injection hole 8 of the fuel distributor 1 into the combustion space 3. Since the fuel distributor 1 has the double-walled structure, the electrode 12 and the support member 15 provided within the fuel distributor 1 do not inhibit the fuel gas from being supplied from the fuel gas supply device 4 to the distributor 1 and from being injected from the fuel injection hole 8. Upon the fuel gas and the air being supplied into the combustion space 3 and mixed therein, a voltage from the ignition circuit 13 is applied to the electrode 12. This causes electric discharge between the electrode 12 and the inner peripheral wall 2B of the air injector 2. As a result, ignition takes place. Then, combustion is performed and the flame is generated within the combustion space 3. At this time, as in the first embodiment, the temperature detector 6 detects the temperature within the combustion space 3 and the flame detector, detects the flame condition.

In accordance with the configuration of the second embodiment, in addition to the effects provided by the configuration of the first embodiment, effects described below is obtained. In the configuration of the second embodiment, since the electrode 12 functioning as the ignition means is contained in the fuel distributor 1, the space for installing the ignition means around the burner, for example, above the combustion space 3, becomes unnecessary unlike the conventional configuration. Therefore, heat radiation from the installation space is avoided and the object to be heated can be heated efficiently. The size of the burner can be reduced because of the absence of the installation space. As a result, flexibility of the configuration around the burner can be further improved.

While ignition is performed in such a manner that electric discharge is caused to occur between the electrode 12 and the inner peripheral wall 2B of the air injector 2, this may be performed by electric discharge between the electrode 12 and the fuel distributor 1. In this case, to facilitate the electric discharge between the electrode 12 and the fuel distributor 1, it is preferable that the tip end of the electrode 12 that protrudes into the combustion space 3 is bent toward the fuel distributor 1. It should be noted that the shape of the electrode 12 is not intended to be limited to the above, that is, the electrode is not necessarily bent.

### (Embodiment 4)

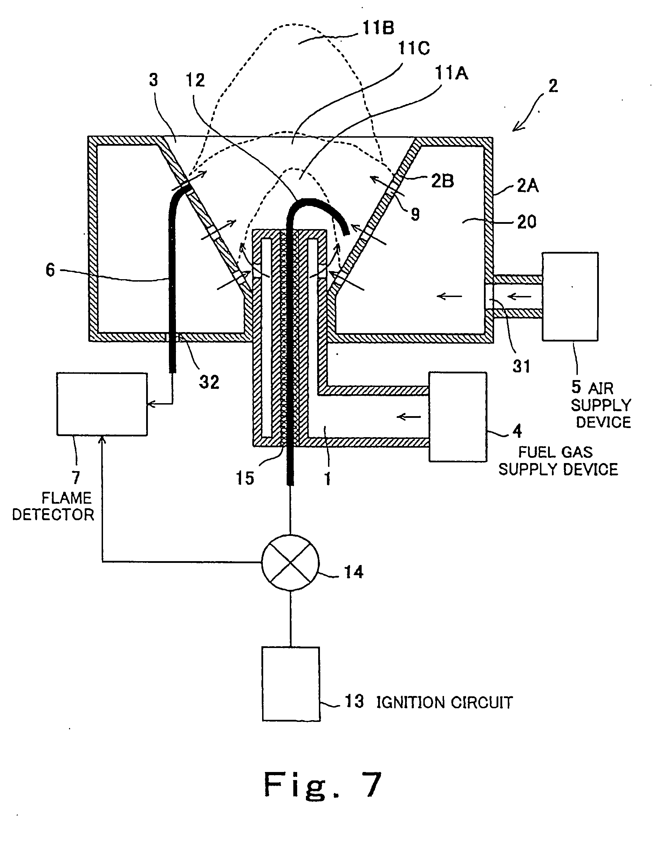

Fig. 7 is a cross-sectional view schematically showing a configuration of a burner according to a fourth embodiment of the present invention. The burner of this embodiment is substantially identical in configuration to the burner of the first embodiment except that the ignition circuit 13 and the flame detector 7 are connected in parallel to the electrode 12 through a switch 14. In this configuration, switching is performed so that the electrode 12 is connected to the ignition circuit 13 in ignition and the electrode 12 is connected to the flame detector 7 after detection of ignition.

In ignition, the switch 14 performs switching so that the electrode 12 is connected to the ignition circuit 13, and ignition is carried out as in the third embodiment. Meanwhile, when the ignition takes place and the flame is generated, the flame detector 7 detects ignition based on the temperature information of the combustion space 3 which has been detected by the temperature detector 6. Upon detection, the switch 14 performs switching so that the electrode 12 is connected to the flame detector 7. Thereby, the flame detector 7 detects the flame based on an output current detected by the electrode 12 by the conventional flame detecting method as well as the flame detecting method using the temperature detector6. Thus, the flame can be detected by two methods using the temperature detector 6 and the electrode 12, and hence the flame can be detected more accurately.

Here, the flame condition in the upper region of the combustion space 3 can be detected by the temperature detector 6, and the flame condition in the lower region of the combustion space 3 can be detected by the electrode 12 with tip end thereof placed in the lower region within the combustion space 3 that is lower than the tip end of the temperature detector 6. By detecting the flame conditions in plurality of different regions within the combustion space 3, the abnormal combustion condition can be detected as in the second embodiment.

First, in the case where combustion is performed normally, and a flame 11C is thereby generated, the flame detector 7 judges that the ignition has occurred in the upper region of the combustion space 3, based on the temperature detected by the temperature detector 6 provided in the upper region of the combustion space 3 (vicinity of the exit of the combustion space 3). Concurrently with detection by the temperature detector 6, the output current from the electrode 12 placed in the lower region of the space 3 (in the vicinity of the fuel distributor 1) is detected and the detected current value is converted into a voltage value. Based on whether or not the voltage value is larger than a threshold voltage, it is judged whether or not ignition has occurred. In this case, since the flame is formed in the lower region of the combustion space 3, the output current becomes large, and hence, the voltage is larger than the threshold voltage. So, the flame detector 7 judges that the ignition has occurred in the lower region of the combustion space 3. Thus, since it is judged that ignition has occurred in both of the upper and lower regions of the combustion space 3, normal combustion is confirmed.

On the other hand, for example, if the combustion amount becomes too large or the amount of air supply becomes small for some reasons, thereby causing the flame to be lifted to some degrees, abnormal combustion takes place, and a flame 11B is generated in substantially the upper region of the combustion space 3. Such a flame 11B causes the upper region of the combustion space 3 to be heated greatly, thereby resulting in a temperature of this upper region higher than normal. For this reason, the temperature detected by the temperature detector 6 provided in the upper region of the combustion space 3 becomes high. Based on this, the flame detector 7 judges that ignition has occurred in the upper region of the combustion space 3. Conversely, the output current from the electrode 12 placed in the lower region of the combustion space 3 is not detected because of absence of the flame in the lower region of the combustion space 3, and therefore, the voltage value into which the current value has been converted becomes smaller than the threshold voltage. From this, the flame detector 7 judges that the flame has vanished in the lower region of the combustion space 3. And, from these judgment as to ignition in the upper and the lower regions of the combustion space 3, the abnormal combustion condition has been confirmed.

Further, for example, the combustion amount becomes too small, or the amount of air supply becomes large for some reasons, abnormal combustion condition occurs, and a small flame 11A is generated in the lower region of the combustion space 3. When the flame 11A is generated, the output current from the electrode 12 is detected because of the presence of the flame. In this case, the voltage value into which the detected current value has been converted is larger than the threshold voltage, and based on this, the flame detector 7 judges that ignition has occurred in the lower region of the combustion space 3. On the other hand, the temperature detected by the temperature detector 6 provided in the upper region of the combustion space 3 becomes low because of absence of the flame. Based on this temperature information, the flame detector 7 judges that the flame has vanished in the upper region of the combustion space 3. From judgment of ignition in the upper and lower regions of the combustion space 3, the abnormal combustion state is confirmed.

In the first to fourth embodiments, the temperature detecting portion of the temperature detector is placed within the air injection hole, but this is only illustrative. For example, a temperature detector made of a heat-resistant material may extend further into the combustion space. More specifically, the temperature detector may be placed differently from those in the first to fourth embodiments, so long as it is thermally insulated from a burner component around it and is exposed to an air flow injected from the air injection hole. It should be noted that, if the tip end of the temperature detecting portion of the temperature detector is set back to a considerable degree from the interface between the air injection hole 9 and the combustion space 3, or is located between the outer wall and the inner wall of the air injector, the temperature within the combustion space cannot be detected accurately, correctly, and smoothly. It is therefore necessary to place the temperature detecting portion of the temperature detector at a location to enable temperature variation in the combustion space to be detected immediately, i.e., at least face the combustion space 3.

In the second to fourth embodiments, the tip end of the temperature detecting portion side of the temperature detector is shaped to have a corner portion. Alternatively, as in the case of the alternative example of the first embodiment, the tip end of the temperature detector may be hemispherical.

### (Embodiment 5)

Fig. 8 is a view schematically showing a configuration of a fuel cell power generation system comprising a hydrogen generator including the burner of the present invention. As shown in Fig. 8, a fuel cell power generation system 10 comprises a fuel cell 53 and a hydrogen generator 52 as major components. The fuel cell 53 has the conventional structure.

The hydrogen generator 52 comprises a burner 50, a reformer 51, and a CO shifter 54. As the burner 50, the burner described in the first to fourth embodiments is used. The reformer 51 and the CO shifter 54 have the conventional structures. Within the reformer 51, CH₄ as the fuel gas is supplied, and a reforming reaction is conducted as represented by a reaction formula. Since the reforming reaction needs to be carried out at a temperature as high as 650 to 700°C, in the hydrogen generator 52, the burner 50 heats the reformer 51. The reformed gas generated through the reforming reaction in the reformer 51 is supplied to the CO shifter 54. In the CO shifter 54, CO is removed from the reformed gas by the reaction represented by a reaction formula in Fig. 8. Thus, in the reformer 51 and the CO shifter 54, a hydrogen-rich gas containing H₂ as a major component is generated, and is supplied to the fuel cell 53 as the fuel gas. In the hydrogen generator 52, the hydrogen-rich gas (generated gas) containing large amount of CO is generated during start of the generator. However, such a generated gas cannot be used in the fuel cell 53 because CO degrades the electrode of the fuel cell 53. For this reason, such a gas is supplied to the burner 50 of the hydrogen generator 52 as the fuel gas. Although the generated gas contains large amount of CO, the operation of the reformer 51 is controlled so that the conversion rate of CH₄ into H₂ and CO₂ in the reforming reaction becomes high, and therefore, the percentage of unconverted hydrocarbon based combustible substance contained in the generated gas is low and the content of H₂ contained in the generated gas is high.

The hydrogen rich gas generated in the hydrogen generator 52 is supplied to the fuel cell 53, where reaction is conducted using the hydrogen-rich gas and oxygen contained in the air as represented by a reaction formula in Fig. 7, thereby generating a power. An electric energy derived from the fuel cell 53 is used for various purposes. On the other hand, the off-gas containing H₂ which remains unused after the reaction, which is included in the hydrogen-rich gas supplied to the fuel cell 53, is supplied to the burner 50 of the hydrogen generator 52 and used as the fuel gas of the burner 50.

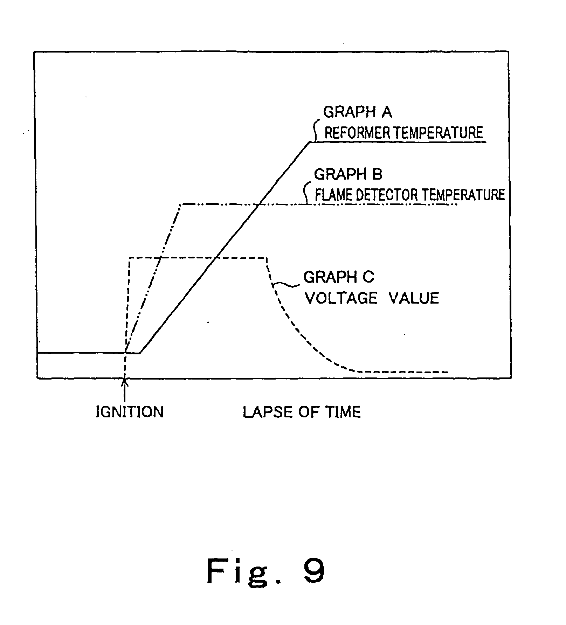

Hereinbelow, a flame detecting operation in the hydrogen generator 52 in the fuel cell power generation system 100 (Fig. 8) including the burner 50 of the fourth embodiment in Fig. 7 will be described with reference to Fig. 9.

Fig. 9 is a view showing operation data of the hydrogen generator 52 in the fuel cell power generation system 100 of this embodiment. As shown in Fig. 9, a graph A represents time-series variation in temperature of the reformer 51 of the hydrogen generator 52, graph B represents time-series variation in temperature of the combustion space 3 detected by the temperature detector 6, and graph C represents time-series variation in the voltage value into which the output current value from the electrode 12 (Fig. 7) has been converted.

As shown in the graph A, when the fuel cell power generation system 100 starts and the burner 50 is ignited, the temperature of the reformer 51 increases after a lapse of a predetermined time after ignition because of its large heat capacity. And, after a lapse of several minutes, the temperature of the reformer 51 increases to a predetermined value ( about 650 to 700°C ) and is kept at this temperature.

On the other hand, as shown in the graph B, when the burner 50 is ignited, temperature variation within the combustion space 3 can be detected by the temperature detector 6, and the detected temperature gradually increases just after the voltage value of the electrode 12 increases as described later. Then, after a lapse of time, and a predetermined temperature is reached, the detected temperature becomes constant.

As shown in the graph C, since the generated gas containing a high content of hydrocarbon based combustible substance (or off-gas) is supplied to the burner 50 during ignition, the voltage value into which the output current value from the electrode 12 has been converted increases in a moment of time. As described above, this voltage value is affected by a composition of the generated gas, and hence varies as described below with a lapse of an operation time. Until the reformer 51 reaches the predetermined temperature, a conversion rate in the reforming reaction gradually increases, and the concentration of hydrogen contained in the generated gas which is obtained from the reformer 51 gradually increases. Correspondingly, the content of the hydrocarbon based combustible substance contained in the generated gas gradually decreases. As a result, the voltage value of the electrode 12 decreases regardless of the increase in the temperature of the reformer 51. And, when the reformer 51 is kept at the predetermined temperature, the voltage value becomes constant at a lower limit value. In this case, if the conversion rate in the reformer 51 is increased in order to generate a large amount of hydrogen in the hydrogen generator 52, the voltage value is further reduced.

As should be appreciated from the above, in the hydrogen generator 52, the flame can be detected by the conventional flame detecting method based on the voltage value of the electrode 12 during ignition and a predetermined period thereafter. In particular, during ignition, because of high responsivity to ignition, the flame can be detected more accurately than detection by the temperature detector 6. However, when the temperature of the reformer 51 increases, thereby causing the conversion rate in the reforming reaction to increase, detection using the electrode 12 becomes difficult under the influence of noises. Accordingly, the flame is detected using the electrode 12 in ignition, and thereafter, under the condition in which the gas containing low content of hydrocarbon based combustible substance because the conversion rate in the reformer 51 is high, is supplied to the burner 50, the flame is detected using the temperature detector 6. Thereby, generation of the flame can be detected as soon as ignition takes place, and then, the flame condition can be detected accurately under the condition in which combustion is performed in the burner 50 using the gas containing low content of hydrocarbon based combustible substance as the fuel gas.

In accordance with the above configuration, during operation of the fuel cell power generation system 100, the flame can be detected accurately in the hydrogen generator 52 regardless of the composition of the fuel gas supplied to the burner 50. Therefore, combustion is carried out by the burner 50 using the off-gas or the generated gas as the fuel gas. As a result, it is possible to achieve a power generation system using the off-gas or the generated gas as the fuel, in which power generation efficiency is high, burden on environment is small, and safety is high.

While the burner of the present invention is used for heating the hydrogen generator in the fuel power generation system, this may be used as a burner using the gas containing a low content of combustible substances including compound at least containing carbon and hydrogen as the fuel gas, for example, a burner for heating a hot water supply device.

Numerous modifications and alternative embodiments of the invention will be apparent to those skilled in the art in the light of the foregoing description. Accordingly, the description is to be construed as illustrative only, and is provided for the purpose of teaching those skilled in the art the beet mode of carrying out the invention. The details of the structure and/or function may be varied substantially without departing from the spirit of the invention.

## Claims

1. A burner having a fuel distributor configured to inject a fuel supplied from a fuel supply device; and an air injector placed such that the air injector surrounds the fuel distributor so as to form a combustion space around the fuel distributor and having an air injection hole through which air supplied from an air supply device is injected, the air injected from the air injection hole and the fuel injected from the fuel distributor being combusted to allow a flame to be generated in the combustion space, the burner comprising:
a temperature detector for detecting a temperature of the combustion space, the temperature detector having a temperature detecting portion located within the air injection hole or in an air flow passage of the combustion space; and
a flame detector for detecting a condition of the flame within the combustion space, based on the temperature detected by the temperature detector.

2. The burner according to Claim 1, wherein the temperature detector is placed such that the temperature detecting portion is located within the air injection hole or within the combustion space in the vicinity of the air injection hole.

3. The burner according to Claim 1, wherein the temperature detector is placed so as to penetrate the air injector.

4. The burner according to Claim 1, wherein the temperature detecting portion of the temperature detector is thermally insulated from an inner face of the air injection hole.

5. The burner according to Claim 4, wherein a gap is formed between the temperature detector and the inner face of the air injection hole, and a width of the gap is substantially uniform over an outer periphery of the temperature detector.

6. The burner according to Claim 4, wherein the air injector has a plurality of air injection holes, and a cross-sectional area of the gap between the air injection hole within which the temperature detector is provided and the temperature detector is substantially equal to a cross-sectional area of the air injection hole within which the temperature detector is not provided.

7. The burner according to Claim 1, wherein the temperature detector has the temperature detecting portion at an end portion thereof, and a body of the temperature detector is contained within the air injector.

8. The burner according to Claim 7, wherein an end portion of the temperature detecting portion side of the temperature detector is substantially covered with an oxidation film.

9. The burner according to Claim 7, wherein an end portion of the temperature detecting portion side of the temperature detector is substantially hemispherical.

10. The burner according to Claim 1, wherein the temperature detector is a sheath-shaped thermo couple.

11. The burner according to Claim 1, wherein a plurality of temperature detectors are provided at different positions within the combustion space to detect temperatures of different regions within the combustion space.

12. The burner according to Claim 1, wherein the combustion space has a cross-sectional area that increases toward a flame radiation direction.

13. The burner according to Claim 1, further comprising:
an electrode contained within the fuel distributor and having an end portion that protrudes into the combustion space; and
an ignition circuit electrically connected to the electrode, for applying a voltage to the electrode to allow electric discharge from the electrode to occur within the combustion space.

14. The burner according to Claim 13, further comprising:
a switch configured to perform switching so that the electrode is connected to the ignition circuit during ignition, and the electrode is connected to the flame detector when the flame detector judges that ignition has occurred based on temperature information of the combustion space from the temperature detector, wherein the flame detector detects the flame based on the temperature information from the temperature detector and detects the flame based on an output current from the electrode.

15. The burner according to Claim 14, wherein the end portion of the electrode that protrudes into the combustion space is placed in a region different from a region of the combustion space in which the temperature detector is placed, to detect the flame in the region which is different from the region where the flame is detected by the temperature detector.

16. The burner according to Claim 15, wherein the temperature detector detects the flame in an upper region of the combustion space in the flame radiation direction, and the electrode detects the flame in a lower region of the combustion space in the flame radiation direction.

17. A hydrogen generator comprising:
a burner having a fuel distributor configured to inject a fuel supplied from a fuel supply device; and an air injector placed such that the air injector surrounds the fuel distributor so as to contain the fuel distributor and form a combustion space around the fuel distributor and having an air injection hole through which air supplied from an air supply device is injected, the air injected from the air injection hole and the fuel injected from the fuel distributor being combusted to allow a flame to be generated in the combustion space, the burner including:
a temperature detector for detecting a temperature of the combustion space, the temperature detector having a temperature detecting portion located within the air injection hole or in an air flow passage of the combustion space; and
a flame detector for detecting a condition of the flame within the combustion space, based on the temperature detected by the temperature detector, and
a reformer for generating a reformed gas containing hydrogen by a reforming reaction of a feed material including a compound containing at least carbon and hydrogen, the burner being configured to heat the reformer.

18. A fuel cell power generation system comprising:
a hydrogen generator including:
a burner having a fuel distributor configured to inject a fuel supplied from a fuel supply device; and an air injector placed such that the air injector surrounds the fuel distributor so as to contain the fuel distributor and form a combustion space around the fuel distributor and having an air injection hole through which air supplied from an air supply device is injected, the air injected from the air injection hole and the fuel injected from the fuel distributor being combusted to allow a flame to be generated in the combustion space, the burner including:
a temperature detector for detecting a temperature of the combustion space, the temperature detector having a temperature detecting portion located within the air injection hole or in an air flow passage of the combustion space; and
a flame detector for detecting a condition of the flame within the combustion space, based on the temperature detected by the temperature detector, and
a reformer for generating a reformed gas containing hydrogen by a reforming reaction of a feed material including a compound containing at least carbon and hydrogen, the burner being configured to heat the reformer; and
a fuel cell configured to generate a power using a gas containing hydrogen as a major component which is supplied from the hydrogen generator to a fuel electrode and an oxidizing gas supplied to an oxidizing electrode.
